# EUROPEAN PATENT APPLICATION

(11) **EP 0 816 175 A1**
(43) Date of publication of application: **07.01.1998**
(21) Application number: 97500080.3
(22) Date of filing: 28.04.1997
(51) Int. Cl.: B60R 13/04

(54) **Band for covering welded joints in car bodies**

(30) Priority: 24.06.1996 ES 9601718
(71) Applicant: Desenvolupaments Tecnics, S.A. (DETECSA), 08184 Palau de Plegamans (ES)
(72) Inventor: Fernandez Menendez, Ramon, Cerdanyola, (Barcelona) (ES)
(74) Representative: Durán Olivella, Alfonso

(57) **Abstract**

The band of the type comprising a core of synthetic material provided with side fins for securing it in the side walls of the U-shaped cavity formed in the welded joint is characterised in that it comprises a co-extruded strip having a material of greater hardness in the area corresponding to the upper portion closing the neck of the welded joint, and a softer material in the remainder of the component which comprises the side fins for resilient securing, the band also comprising an internal metal frame for controlling expansion and contraction, and the upper, closing portion having a coating of paint matching that of the walls of the welded joint.

## Description

The present invention relates to a band for covering welded joints in sheet steel structures, especially in car bodies.

Especially when the sides of the car body are joined to the roof of the same, a longitudinal channel is formed on both sides of the roof in order to receive the weld points which will join the roof to the sheets forming the side. This U-shaped channel must subsequently be closed, this usually being effected by means of an extruded strip of plastics material secured by means of clamps. In some cases, if it is desired that the roof have the same paint finish over its entire surface, an aluminium extruded strip is used which can have the same colour as the body of the vehicle.

However, the use of painted aluminium extruded strips entails substantial complication in the strips or bands sections for covering welded joints, which results in a higher manufacturing cost for the embellishment strip. In addition, the structure of the embellishment based on two materials, namely the mentioned aluminium part and a base support of plastics material, causes some problems in the formation of the joint.

In order to solve the above-mentioned problems, the present invention provides a band produced from synthetic resins, having two areas produced from materials having different hardnesses, namely a soft area inside the channel, which area, by means of fins arranged on both sides, enables the band to be adequately secured to the channel, and another, harder area in the outer portion or visible portion, which area can be painted in the colour of the body of the car, a uniform aesthetic result thus being achieved and the manufacturing costs being much reduced.

The band forming the subject-matter of the present invention comprises, on the inside, a metal reinforcement or core that is to control the contraction and expansion of the band relative to the car body.

Therefore, to summarise, the novel section comprises a co-extruded band having a material of greater hardness in the area corresponding to the upper portion closing the neck of the welded joint, and a softer material in the remainder of the component which comprises the side fins for resilient securing, the band also comprising an internal metal reinforcement for controlling expansion and contraction, and the upper, closing portion having a coating of paint matching that of the walls of the welded joint. The upper portion of the band, which portion is to close the neck of the welded joint, has a single laminar structure with a continuous upper surface which extends to both sides from the central core of the band. The upper area of the band, which area is to close the neck of the welded joint, has a hardness of approximately from 45 to 65 Shore D, preferably 50 Shore D. The soft portion of the section has a hardness of from 50 to 65 Shore A, preferably 58 Shore A.

In order to explain the invention more clearly, a drawing of a co-extruded band according to the present invention is appended by way of non-limiting explanatory example.

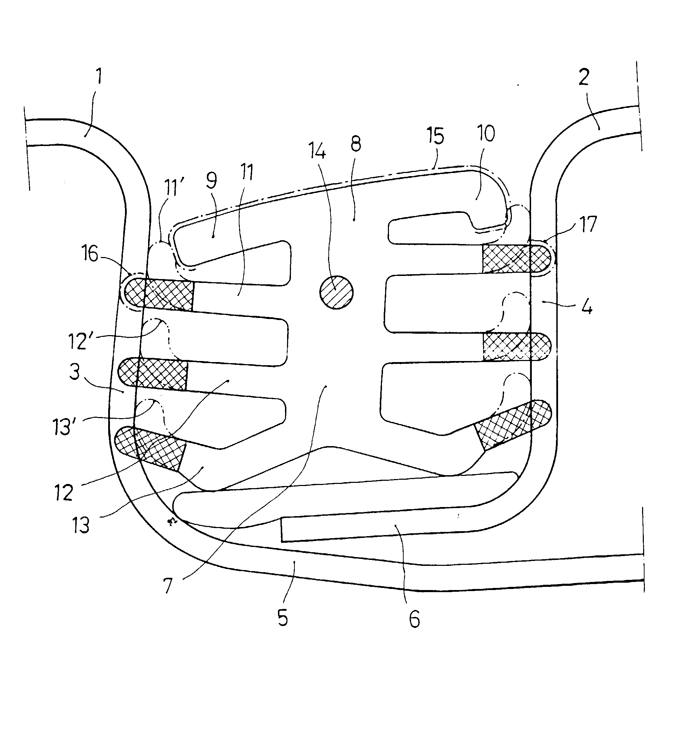

The single figure shows an enlarged cross-section through the joint which is to be closed approximately in a U-shape and which is formed by the sheets 1 and 2 which, in conventional manner, form a wide channel having walls 3 and 4 and a base defined by the lower portions 5 and 6 of the mentioned elements 1 and 2.

The joint is formed by welding the lower areas or wings 5 and 6 which are shown unjoined in the figure for the purpose of greater clarity.

The present invention is characterised by the formation of a coextruded band of synthetic material having an elongate central core 7 which is arranged substantially in the plane of symmetry of the U-shaped channel and which is formed by two co-extruded portions having different characteristics, the upper portion corresponding to a covering wing 8 which has lateral extensions 9 and 10 and which is to close the opening of the U-shaped area indicated above. The area 8 adjoins the upper portion of the core 7 which has, laterally, a large number of fins on both sides, such as 11, 12 and 13 on one side and 11', 12' and 13' on the other side, the dimensions of which fins permit contact with the internal walls of the U-shaped channel, and which fins, in the mounted position, adopt forms which are slightly bent at the ends, such as those indicated by the numerals 11", 12" and 13". It will be appreciated that the mentioned arrangement applies to both sides.

The band has an internal metal reinforcement, such as the longitudinal rod 14, for controlling expansion and contraction.

As will be appreciated, the exact form of the upper laminar part 8 and also of the side fins and the core 14 may be varied within wide limits.

Once the band has been installed inside the U-shaped joint, it is provided, at the visible upper portion, especially the laminar area 8, with a coating of paint represented by the dot-dash line 15 and having the same colour as the body of the car. As will be appreciated, the paint may likewise be applied to end areas of the upper fins 11 and 11' represented by the dot-dash lines 16 and 17.

By means of the present invention, it is possible to close welded joints in the bodies of cars, especially those of the roof, simply by introducing the special sections forming the subject-matter of the invention.

## Claims

1. Band for covering welded joints in car bodies, of the type comprising a core of synthetic material provided with side fins for securing it in the side walls of the U-shaped cavity formed in the welded joint, characterised in that it comprises a co-extruded section having a material of greater hardness in the area corresponding to the upper portion closing the neck of the welded joint, and a softer material in the remainder of the component which comprises the side fins for resilient securing, the band also comprising an internal metal reinforcement for controlling expansion and contraction, and the upper, closing portion having a coating of paint matching that of the walls of the welded joint.

2. Band for covering welded joints in car bodies, according to Claim 1, characterised in that the upper portion of the band, which portion is to close the neck of the welded joint, has a single laminar structure with a continuous upper surface which extends to both sides from the central core of the section.

3. Band for covering welded joints of car bodies, according to the preceding Claims, characterised in that the upper area of the band, which area is to close the neck of the welded joint, has a hardness of approximately from 45 to 65 Shore D.

4. Band for covering welded joints, according to Claims 1 to 3, characterised in that the soft portion of the band has a hardness of from 50 to 65 Shore A.

5. Band for covering welded joints of car bodies, according to Claim 4, characterised in that the upper, closing area has a hardness of 50 Shore D.

6. Band for covering welded joints of car bodies, according to Claim 5, characterised in that the resilient portion of the section has a hardness of 58 Shore A.
